# EUROPÄISCHE PATENTANMELDUNG

(11) **EP 3 343 476 A1**
(43) Veröffentlichungstag der Anmeldung: **04.07.2018**
(21) Anmeldenummer: 16207512.1
(22) Anmeldetag: 30.12.2016
(51) Int. Cl.: G06Q 10/06

(54) **VERFAHREN UND VORRICHTUNG ZUM RECHNERGESTÜTZTEN ENTWURF EINES PRODUKTIONSPROZESSES ZUM PRODUZIEREN EINES PRODUKTS**

(71) Anmelder: Siemens Aktiengesellschaft, 80333 München (DE)
(72) Erfinder: Albrecht, Sebastian, 85399 Hallbergmoos (DE); Grimm, Stephan, 81825 München (DE); Meyer-Delius Di Vasto, Daniel, 81541 München (DE); Milicic Brandt, Maja, 81827 München (DE)

(57) **Zusammenfassung**

Verfahren zum rechnergestützten Entwurf eines Produktionsprozesses zum Produzieren eines Produkts in einem vorgegebenen Produktionssystem (SYS) aus mehreren vorgegebenen technischen Komponenten (CO), welche am Produktionsprozess beteiligt sind, wobei in dem Produktionsprozess Ausgangsprodukte verarbeitet werden, welche zu Teilprodukten (TP) und schließlich zu dem Produkt zusammengesetzt werden, wobei:
a) eine digitalen Spezifikation in der Form eines ersten Prozessgraphen (PG1) eingelesen wird, der Produktionsschritte (N1, N2, ..., N10) zum Produzieren des Produkts beschreibt;
b) bestimmt wird, ob der erste Prozessgraph (PG1) ein Prozessgraph von einem ersten Porzessgraphtyp (AVS) ist;
c) falls der erste Prozessgraph (PG1) vom ersten Prozessgraphtyp (AVS) ist, ein erster Planer (PL1) ausgeführt wird, der aus dem ersten Prozessgraphen (PG1) eine erste Sequenz (SEQ1) von Basisfunktionen (SK) von einem ersten Sequenztyp (CPS) generiert;
d) ein Reasoner (RE) ausgeführt wird, der aus der ersten Sequenz (SEQ1) von Basisfunktionen (SK) einen zweiten Prozessgraphen (PG2) von einem zweiten Prozessgraphtyp (AFS) generiert;
e) ein zweiter Planer (PL2) ausgeführt wird, der aus dem zweiten Prozessgraphen (PG2) eine zweite Sequenz (SEQ2) von Basisfunktionen (SK) von einem zweiten Sequenztyp (FPS) generiert.

## Beschreibung

Die Erfindung betrifft ein Verfahren und eine Vorrichtung zum rechnergestützten Entwurf eines Produktionsprozesses zum Produzieren eines Produkts in einem vorgegebenen Produktionssystem aus mehreren vorgegebenen technischen Komponenten.

Die Erfindung betrifft ferner ein Verfahren und eine Vorrichtung zur rechnergestützten Steuerung eines Produktionsprozesses.

Außerdem betrifft die Erfindung ein Computerprogramm bzw. ein Computerprogrammprodukt.

Die Erfindung liegt auf dem technischen Gebiet der Produktionsplanung sowie einer darauf basierenden rechnergestützten Steuerung eines Produktionsprozesses zum Produzieren eines aus mehreren Teilprodukten zusammengesetzten Produkts in einem Produktionssystem.

Um Produktionssysteme flexibel für die Herstellung unterschiedlicher Produkte einzusetzen, sind aus dem Stand der Technik rechnergestützte Planungsprogramme (auch als Planer bezeichnet) bekannt, die bei Inbetriebnahme des Produktionssystems ausgeführt werden. Basierend auf entsprechenden Eingabedaten, welche u. a. das herzustellende Produkt und möglichen Produktionsschritte charakterisieren, wird durch das Planungsprogramm ein Produktionsprozess in der Form eines Produktionsplans entworfen, der die einzelnen erforderlichen Produktionsschritte sowie benötigten Ausgangsprodukte und daraus resultierenden Zwischenprodukte spezifiziert. Durch Ausführung des Produktionsplans wird dann das entsprechende Produkt im Produktionssystem hergestellt.

Im Stand der Technik werden rechnergestützte Planer beschrieben, die auf Ontologien zugreifen, welche das Wissen über das herzustellende Produkt bzw. dessen Teilprodukte und das hierfür verwendete Produktionssystem repräsentieren. Dabei kann der Planer über sog. Reasoning (Schlussfolgern) weiteres Wissen aus der Ontologie ableiten.

Die derzeitigen Ansätze zur rechnergestützten Planung bzw. zum rechnergestützten Entwurf eines Produktionsprozesses unter Verwendung von Ontologien sind sehr komplex und erfordern einen sehr großen Rechenaufwand, so dass diese Technologie derzeit nur für einfach aufgebaute Produktionsaufgaben eingesetzt werden kann.

Aufgabe der Erfindung ist es, ein Verfahren zum rechnergestützten Entwurf eines Produktionsprozesses zu schaffen, welches einfach und flexibel an unterschiedliche Produktionsaufgaben angepasst werden kann.

Diese Aufgabe wird durch die unabhängigen Patentansprüche gelöst. Vorteilhafte Weiterbildungen der Erfindung sind in den abhängigen Ansprüchen definiert.

Das erfindungsgemäße Verfahren dient zum rechnergestützten Entwurf eines Produktionsprozesses zum Produzieren eines Produkts in einem vorgegebenen Produktionssystem aus mehreren vorgegebenen technischen Komponenten, welche am Produktionsprozess beteiligt sind. In dem Produktionsprozess werden Ausgangsprodukte verarbeitet, welche zu Teilprodukten und schließlich zu dem zu produzierenden Produkt zusammengesetzt werden. Dabei sind für das vorgegebene Produktionssystem Basisfunktionen hinterlegt, welche als gekapselte Programme durch die vorgegebenen Komponenten bei Spezifikation von (allen) Parametern der jeweiligen Basisfunktion ausführbar sind. Das Verfahren greift ferner auf eine Wissensbasis und insbesondere eine Ontologie zurück, in der in digitaler Form semantische Informationen über im Produktionsprozess verarbeitbare Teilprodukte und über im Produktionsprozess ausführbare Produktionsschritte gespeichert sind. In allen Varianten der Erfindung sind die semantischen Informationen vorzugsweise nicht für das vorgegebene Produktionssystem spezifisch, d.h. die semantischen Informationen beschreiben generische Informationen, welche nicht nur auf das einzelne vorgegebene Produktionssystem, sondern auch auf andere Produktionssysteme bzw. eine bestimmte Klasse von Produktionssystemen anwendbar sind. In diesem Sinne sind die Teilprodukte bzw. Produktionsschritte, die in den semantischen Informationen enthalten sind, nicht an das vorgegebene Produktionssystem gekoppelt und somit hardwareunabhängig, was für die obigen Basisfunktionen nicht der Fall ist, denn diese sind für vorgegebene Komponenten des vorgegebenen Produktionssystems spezifiziert.

In dem erfindungsgemäßen Verfahren werden die nachfolgend beschriebenen Schritte a) bis e) rechnergestützt und automatisiert durchgeführt.

In einem Schritt a) wird eine digitale Spezifikation in der Form eines ersten Prozessgraphen eingelesen, der Produktionsschritte zum Produzieren des Produkts unter Verwendung der Ausgangsprodukte und Abhängigkeiten zwischen den Produktionsschritten beschreibt. Dieser Prozessgraph ist vorzugsweise ein Graph aus Knoten und Kanten, der eine partielle Ordnung beschreibt, wobei ein solcher Prozessgraph weiter unten näher definiert wird.

In einem Schritt b) des erfindungsgemäßen Verfahrens wird bestimmt bzw. ermittelt, ob der erste Prozessgraph ein Prozessgraph von einem ersten Prozessgraphtyp oder von einem zweiten Prozessgraphtyp ist. In dem ersten Prozessgraphtyp ist zumindest ein im Produktionsprozess entstehendes Teilprodukt nicht spezifiziert, wohingegen in einem zweiten Prozessgraphtyp alle im Produktionsprozess entstehenden Teilprodukte spezifiziert sind. Gegebenenfalls kann im ersten Prozessgraphen kein einziges Teilprodukt spezifiziert sein.

In einem Schritt c) des erfindungsgemäßen Verfahrens wird ein erster Planer ausgeführt, falls der erste Prozessgraph vom ersten Prozessgraphtyp ist und im Falle des Vorhandenseins eines ersten Kriteriums dieses erste Kriterium erfüllt ist. Mit anderen Worten wird in einer ersten Variante der Erfindung, in der kein erstes Kriterium definiert ist, der erste Planer immer ausgeführt, sofern der erste Prozessgraph vom ersten Prozessgraphtyp ist. In einer zweiten Variante wird zu der Ausführung des ersten Planers ein erstes Kriterium benötigt, welches beliebig definiert sein kann und insbesondere durch einen Nutzer festgelegt ist. Insbesondere kann das erste Kriterium darin bestehen, dass ein Flag gesetzt ist, wobei nur bei gesetztem Flag der erste Planer ausgeführt ist, sofern der erste Prozessgraph vom ersten Prozessgraphtyp ist.

Der erste Planer generiert bei seiner Ausführung in Schritt c) aus dem ersten Prozessgraphen eine erste Sequenz von Basisfunktionen von einem ersten Sequenztyp, wobei im ersten Sequenztyp ein oder mehrere Parameter von zumindest einer Basisfunktion nicht spezifiziert sind, d.h. die erste Sequenz von Basisfunktionen ist unvollständig parametrisiert und beschreibt den auszuführenden Produktionsprozess somit nicht vollumfänglich.

In einem Schritt d) wird bei Erfüllung eines zweiten Kriteriums oder unabhängig von einem zweiten Kriterium ein Reasoner ausgeführt. Das zweite Kriterium kann wiederum beliebig definiert sein und insbesondere durch einen Nutzer spezifiziert sein. Ein gesetztes Flag kann ein zweites Kriterium darstellen. Ist die Ausführung des Reasoners unabhängig von dem zweiten Kriterium, wird der Reasoner bei Aufruf des Schritts d) immer ausgeführt. Bei Ausführung des Reasoners wird aus der ersten Sequenz von Basisfunktionen ein zweiter Prozessgraph vom zweiten Prozessgraphtyp generiert. Dabei greift der Reasoner bei seiner Ausführung auf die oben beschriebene Wissensbasis zu. In dem generierten zweiten Prozessgraphen sind nunmehr alle im Produktionsprozess entstehenden Teilprodukte definiert, jedoch ist der Prozessgraph unabhängig von dem vorgegebenen Produktionssystem, welches zur Ausführung des Produktionsprozesses vollständig parametrisierte Basisfunktionen benötigt.

Um die Erzeugung von vollständig parametrisierten Basisfunktionen zu erreichen, wird in einem Schritt e) des erfindungsgemäßen Verfahrens ein zweiter Planer ausgeführt, der aus dem zweiten Prozessgraphen eine zweite Sequenz von Basisfunktionen von einem zweiten Sequenztyp generiert, sofern eine zweite Sequenz von Basisfunktionen auffindbar ist. Der zweite Sequenztyp zeichnet sich dadurch aus, dass alle Parameter von allen Basisfunktionen in diesem Sequenztyp spezifiziert sind. Eine solche zweite aufgefundene Sequenz kann dann durch die vorgegebenen Komponenten des vorgegebenen Produktionssystems ausgeführt werden. Die zweite Sequenz stellt in diesem Sinne den (digitalen) Entwurf des Produktionsprozesses dar.

Das erfindungsgemäße Verfahren weist den Vorteil auf, dass durch geeignete Kombination eines ersten und zweiten Planers mit einem Reasoner eine abstrakte Produktionsprozessbeschreibung, die vom vorgegebenen Produktionssystem entkoppelt ist, in eine hardwarespezifische zweite Sequenz von Basisfunktionen gewandelt werden kann, welche mittels einer geeigneten Steuereinrichtung zur Ausführung im vorgegebenen Produktionssystem gebracht werden können. Durch die Verwendung von mehreren Planern kann dabei die Komplexität der ursprünglichen Produktionsaufgabe sukzessive reduziert werden und auch komplexere Produktionsprozesse rechnergestützt entworfen werden.

In einer bevorzugten Variante des erfindungsgemäßen Verfahrens wird im Falle, dass der erste Prozessgraph vom zweiten Prozessgraphtyp ist, zu Schritt e) übergegangen, wobei bei Ausführung des Schritts e) der erste Prozessgraph mit dem zweiten Prozessgraphen gleichgesetzt wird.

In einer weiteren Variante des erfindungsgemäßen Verfahrens wird im Falle, dass der erste Prozessgraph vom ersten Prozessgraphtyp ist und das obige erste Kriterium gemäß Schritt c) nicht erfüllt ist, mit einem Programm (z.B. einer Heuristik), das auf Expertenwissen über Teilprodukte basiert, aus dem ersten Prozessgraphen ein dritter Prozessgraph vom zweiten Prozessgraphtyp generiert. Anschließend wird zu Schritt e) übergegangen, wobei bei Ausführung des Schritts e) der dritte Prozessgraph mit dem zweiten Prozessgraph gleichgesetzt wird. In dieser Variante kann gegebenenfalls eine zweite Sequenz von Basisfunktionen ohne Zwischenschaltung eines ersten Planers generiert werden.

In einer weiteren Variante des erfindungsgemäßen Verfahrens wird im Falle, dass das zweite Kriterium gemäß Schritt d) nicht erfüllt ist, ein Simulations- und/oder Optimierungsprogramm ausgeführt, das auf Expertenwissen über das vorgegebene Produktionssystem basiert, ausgeführt. Dieses Simulations-und/oder Optimierungsprogramm dient zum Ermitteln der zweiten Sequenz von Basisfunktionen aus der ersten Sequenz. Das erfindungsgemäße Verfahren wird beendet, wenn das Simulations-und/oder Optimierungsprogramm die zweite Sequenz von Basisfunktionen auffindet.

In einer bevorzugten Variante der soeben beschriebenen Ausführungsform wird im Falle, dass das Simulations- und/oder Optimierungsprogramm keine zweite Sequenz von Basisfunktionen auffindet, einer der folgenden Schritte durchgeführt:
- das zweite Kriterium wird als erfüllt eingestuft und das Verfahren wird bei Schritt d) fortgesetzt, d.h. es wird nunmehr der Reasoner zur Ausführung gebracht;
- der erste Prozessgraph wird basierend auf Wissen modifiziert, welches sich aus der mangelnden Auffindbarkeit der zweiten Sequenz von Basisfunktionen ergibt, wobei dieses Wissen z.B. das Wissen über nicht realisierbare Prozessschritte bzw. Basisfunktionen in der zweiten Sequenz enthalten kann.

Im zuletzt genannten Fall kann das Verfahren dann nochmals mit dem modifizierten ersten Prozessgraphen gestartet werden.

In einer weiteren Variante des erfindungsgemäßen Verfahrens wird im Falle, dass der zweite Planer in Schritt e) keine zweite Sequenz von Basisfunktionen auffindet, der erste Prozessgraph basierend auf Wissen modifiziert, welches sich aus der mangelnden Auffindbarkeit der zweiten Sequenz von Basisfunktionen ergibt. Dieses Wissen kann in Analogie zur vorhergehenden Ausführungsform beispielsweise spezifizieren, welche Prozessschritte bzw. Basisfunktionen in der zweiten Sequenz nicht realisiert werden können.

Je nach Ausgestaltung des erfindungsgemäßen Verfahrens können unterschiedliche Planer als erster Planer bzw. zweiter Planer eingesetzt werden. In einer bevorzugten Variante wird als erster Planer ein an sich bekannter HTN-Planer (HTN = Hierarchical Task Network) eingesetzt. Alternativ oder zusätzlich wird vorzugsweise ein Fast-Downward-Planer oder ein Fast-Forward-Planer als zweiter Planer verwendet.

In einer weiteren Variante des erfindungsgemäßen Verfahrens umfassen der erste Prozessgraphtyp und/oder der zweite Prozessgraphtyp jeweils Knoten und Kanten und diese Prozessgraphtypen sind jeweils derart ausgestaltet, dass jeder Knoten einen Produktionsschritt repräsentiert und die Knoten über gerichtete Kanten miteinander verbunden sind. Dabei beschreiben die gerichteten Kanten eine partielle Ordnung derart, dass der Produktionsschritt eines Knotens, in den eine gerichtete Kante hineinläuft, nach dem Produktionsschritt des Knotens auszuführen ist, von dem die gerichtete Kante stammt, und der Produktionsschritt eines Knotens, aus dem eine gerichtete Kante hinausläuft, vor dem Produktionsschritt auszuführen ist, in dessen Knoten die gerichtete Kante hineinläuft.

In einer weiteren bevorzugten Ausführungsform ist eine jeweilige Basisfunktion neben Parametern, welche zur Ausführung der jeweiligen Basisfunktion benötigt werden, durch eines oder mehrere der folgenden Merkmale charakterisiert:
- Vorbedingungen, welche der Zustand des vorgegebenen Produktionssystems zur Ausführung der jeweiligen Basisfunktion erfüllen muss;
- Effekte der Ausführung der jeweiligen Basisfunktion, welche Bedingungen sind, die der Zustand des Produktionssystems nach der Ausführung der jeweiligen Basisfunktion erfüllt;
- Performanzcharakteristika der jeweiligen Basisfunktion, z.B. die zu dessen Ausführung benötigte Zeit.

In einer weiteren bevorzugten Variante des erfindungsgemäßen Verfahrens ist die eingelesene Spezifikation eine durch einen Nutzer über eine Benutzerschnittstelle eingegebene oder editierte Information. Mit anderen Worten ist eine Benutzerschnittstelle vorgesehen, über welche manuell der erste Prozessgraph festgelegt werden kann.

Neben dem oben beschriebenen Verfahren betrifft die Erfindung eine Vorrichtung zum rechnergestützten Entwurf eines Produktionsprozesses zum Produzieren eines Produkts in einem vorgegebenen Produktionssystem aus mehreren vorgegebenen technischen Komponenten, welche am Produktionsprozess beteiligt sind, wobei die Vorrichtung Mittel zur Durchführung der Schritte a) bis e) des erfindungsgemäßen Verfahrens umfasst.

In einer bevorzugten Variante ist diese Vorrichtung zur Durchführung einer oder mehrerer bevorzugter Ausführungsformen des erfindungsgemäßen Verfahrens eingerichtet.

Die Erfindung betrifft darüber hinaus ein Verfahren zur Steuerung eines Produktionsprozesses zum Produzieren eines Produkts in einem vorgegebenen Produktionssystem aus mehreren technischen Komponenten, welche am Produktionsprozess beteiligt sind, wobei in diesem Verfahren das obige Verfahren zum Entwurf eines Produktionsprozesses ausgeführt wird, so dass eine zweite Sequenz von Basisfunktionen erhalten wird. Anschließend werden an das vorgegebene Produktionssystem Ausführungsbefehle gemäß der zweiten Sequenz von Basisfunktionen gegeben, wodurch erreicht wird, dass in dem vorgegebenen Produktionssystem das entsprechende Produkt produziert wird.

Die Erfindung betrifft darüber hinaus eine Vorrichtung zur rechnergestützten Steuerung eines Produktionsprozesses zum Produzieren eines Produkts in einem vorgegebenen Produktionssystem aus mehreren vorgegebenen technischen Komponenten, welche am Produktionsprozess beteiligt sind. Diese Vorrichtung umfasst die obige Vorrichtung zum rechnergestützten Entwurf des Produktionsprozesses, mit welcher eine zweite Sequenz von Basisfunktionen erhalten wird. Ferner ist ein Mittel vorgesehen, um an das vorgegebene Produktionssystem Ausführungsbefehle gemäß der zweiten Sequenz von Basisfunktionen zu geben.

Die Erfindung betrifft darüber hinaus ein Computerprogramm mit einem Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Ferner betrifft die Erfindung ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Ein Ausführungsbeispiel der Erfindung wird nachfolgend anhand der beigefügten Figuren detailliert beschrieben.

Es zeigen:
- Fig. 1: eine schematische Darstellung einer Variante des erfindungsgemäßen Verfahrens; und
- Fig. 2: eine Darstellung eines beispielhaften Prozessgraphen, der im erfindungsgemäßen Verfahren als digitale Spezifikation verarbeitet werden kann.

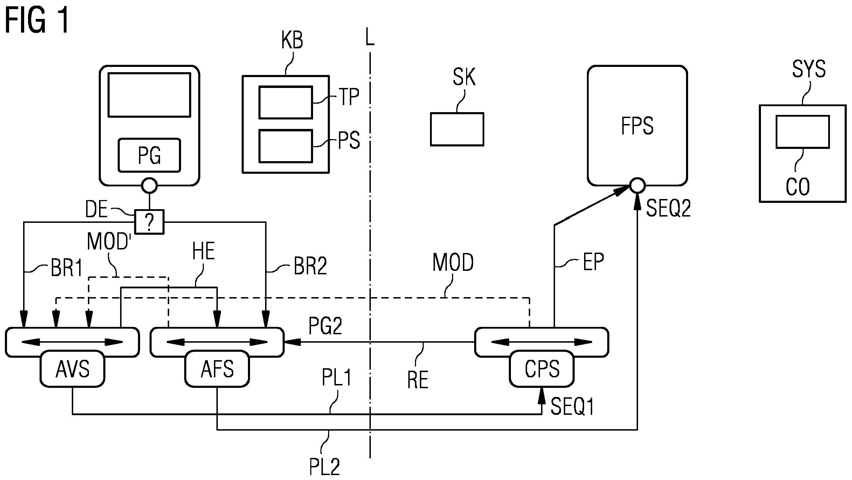

Nachfolgend wird eine Ausführungsform des erfindungsgemäßen Verfahrens erläutert, wobei entsprechende Schritte des Verfahrens in Fig. 1 durch Pfeile angedeutet sind. Zur Verdeutlichung bestimmter Verfahrensschritte wird in der folgenden Beschreibung auf ein Verfahren zur Herstellung eines Spielzeugfahrzeugs verwiesen. In diesem Verfahren werden in einer Folge von Verfahrensschritten die vier Räder des Spielzeugfahrzeugs paarweise an zwei Achsen angebaut und anschließend werden die jeweiligen Achsen mit den angebauten Rädern in ein Chassis eingesetzt, auf das eine Karosserie aufgesetzt wird. Schließlich werden an das Spielzeugfahrzeug noch ein Blaulicht sowie ein Spoiler befestigt.

Ziel des im Folgenden erläuterten Verfahrens ist es, für ein bestimmtes vorgegebenes Produktionssystem SYS, welches eine Anzahl von vorgegebenen technischen Komponenten CO zur Durchführung des Produktionsprozesses enthält, eine Sequenz von Basisfunktionen anzugeben, bei deren Abarbeitung ein Produktionsprozess durchgeführt wird, der einem eingelesenen ersten Prozessgraphen PG1 entspricht. Dabei sind für das vorgegebene Produktionssystem die Basisfunktionen in der Form sog. Skills SK hinterlegt, bei denen es sich um gekapselte Programme handelt, die durch die vorgegebenen Komponenten CO bei Spezifikation aller Parameter des jeweiligen Skills SK ausführbar sind.

Darüber hinaus wird im nachfolgend erläuterten Verfahren auf eine Wissensbasis KB in der Form einer Ontologie zurückgegriffen, welche semantische Informationen über im Produktionsprozess verarbeitbare Teilprodukte TP und über im Produktionsprozess ausführbare Produktionsschritte PS speichert. Diese semantischen Informationen sind dabei nicht für das gerade betrachtete Produktionssystem SYS spezifisch, d.h. es handelt sich um hardwareunabhängige Informationen, die nicht an das vorgegebene Produktionssystem SYS gekoppelt sind.

Aus Übersichtlichkeitsgründen sind das Produktionssystem SYS, die technischen Komponenten CO, die Wissensbasis KB, die Teilprodukte TP, die Produktionsschritte PS sowie die Skills SK in Fig. 1 lediglich schematisch durch Blöcke angedeutet. Ferner verdeutlicht die vertikale Linie L eine Trennung zwischen generischen Informationen, welche nicht für das betrachtete Produktionssystem SYS spezifisch sind (Bereich links von der Linie L), und hardwareabhängige Informationen, welche für das vorgegebene Produktionssystem SYS spezifisch sind (Bereich rechts von der Linie L).

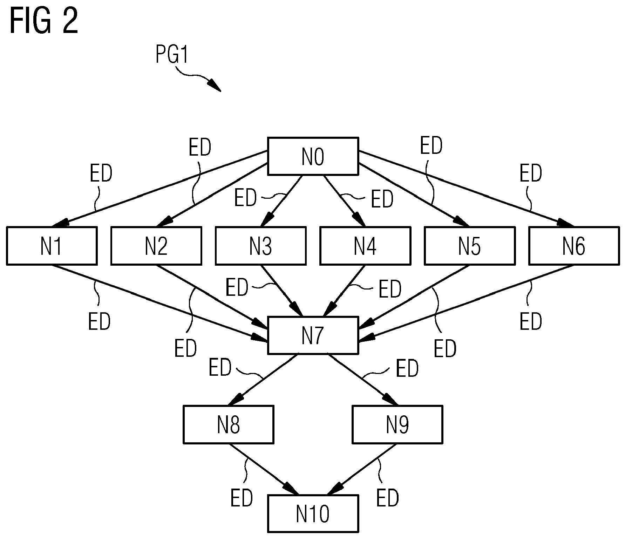

Gemäß dem in Fig. 1 dargestellten Verfahren wird als Eingabe der erste Prozessgraph PG1 eingelesen, der Produktionsschritte zum Produzieren des entsprechenden Produkts über Knoten und Abhängigkeiten zwischen den Produktionsschritten über Kanten beschreibt. Ein Beispiel eines solchen Graphen ist in Fig. 2 gezeigt, welche weiter unten näher erläutert wird. In dem hier beschriebenen Szenario handelt es sich bei dem Prozessgraphen PG1 um einen AVS-Graphen (AVS = abstract process steps with variable subproducts), bei dem zumindest ein im Produktionsprozess entstehendes Teilprodukt nicht spezifiziert ist. Dieser Graph entspricht einem ersten Prozessgraphtyp im Sinne der Ansprüche. Im hier beschriebenen Beispiel enthält der Prozessgraph PG1 nur die verarbeiteten Ausgangsprodukte, ohne ein einziges Teilprodukt festzulegen. Anstatt eines AVS-Graphen kann in dem Verfahren der Fig. 1 gegebenenfalls auch ein AFS-Graph eingelesen werden, der einem zweiten Prozessgraphtyp im Sinne der Ansprüche entspricht (AFS = abstract process steps with fixed subproducts). In einem solchen Graphen sind alle im Produktionsprozess entstehenden Teilprodukte spezifiziert.

Nach dem Einlesen des ersten Prozessgraphen PG1 wird gemäß Fig. 1 in einem Bestimmungsschritt DE bestimmt, ob es sich hierbei um einen AVS-Graphen oder um einen AFS-Graphen handelt. Wie bereits erwähnt, ist im hier betrachteten Szenario der erste Prozessgraph PG1 ein AVS-Graph. Demzufolge wird mit dem linken Zweig BR1 des Verfahrens fortgefahren.

In einem nächsten Schritt wird auf den AVS-Graphen PG1 ein erster Planer PL1 angewandt, bei dem es sich beispielsweise um den bereits eingangs erwähnten HTN-Planer handeln kann. Dieser Planer ermittelt aus dem Prozessgraphen PG1 eine erste Sequenz SEQ1 von Basisfunktionen SK. Diese Sequenz ist eine CPS-Sequenz von Skills (CPS = coarsely parameterized process steps), welche einem ersten Sequenztyp im Sinne der Ansprüche darstellt. Bei diesem Sequenztyp sind die Skills nicht vollständig parametrisiert, d.h. für zumindest ein Skill fehlt zumindest ein Parameter, so dass die Ausführung des Produktionsprozesses im betrachteten Produktionssystem SYS noch nicht möglich ist.

In der hier beschriebenen Ausführungsform wird nach Ermittlung der ersten Sequenz SEQ1 zunächst mittels eines Experten-Planers EP versucht, eine zweite Sequenz SEQ2 von Basisfunktionen abzuleiten. Diese zweite Sequenz SEQ2 stellt eine FPS-Sequenz (FPS = fully parameterized process steps) dar, welche einem zweiten Sequenztyp im Sinne der Ansprüche entspricht. In diesem Sequenztyp sind alle Parameter von allen Skills spezifiziert, so dass damit die Ausführung des Produktionsprozesses auf dem betrachteten Produktionssystem SYS möglich ist. Bei dem obigen Experten-Planer EP handelt es sich um eine Ausführungsform eines Simulations- und/oder Optimierungsprogramms im Sinne der Ansprüche. Ein solches Programm verwendet Expertenwissen über das vorgegebene Produktionssystem SYS. Sollte der Experten-Planer EP tatsächlich eine zweite Sequenz SEQ2 auffinden, ist das Verfahren beendet.

Ist dies nicht der Fall, kann je nach nutzerspezifischer Konfiguration unterschiedlich verfahren werden. In einer ersten Variante wird zunächst in einem Modifikationsschritt MOD eine Anpassung des ursprünglichen ersten Prozessgraphen PG1 vorgenommen. In dem Modifikationsschritt werden dabei Informationen genutzt, die daraus gewonnen werden, dass keine zweite Sequenz SEQ2 durch den Experten-Planer generiert werden konnte. Insbesondere werden im Modifikationsschritt MOD Informationen über die nicht vollständig parametrisierten Skills verarbeitet. Der Modifikationsschritt führt zu einem adaptierten ersten Prozessgraphen PG1, für den die Verarbeitung gemäß Fig. 1 neu gestartet wird.

In einer zweiten Variante wird im Falle, dass der Experten-Planer EP keine zweite Sequenz SEQ2 ermitteln kann, die Ausführung eines Reasoners RE gestartet. Gegebenenfalls kann die Ausführung des Reasoners RE auch erst dann durchgeführt werden, wenn eine vorbestimmte Anzahl von Malen der Modifikationsschritt MOD durchgeführt wurde, ohne dass dies zu einer Ermittlung einer zweiten Sequenz SEQ2 geführt hat. Der Reasoner RE ermittelt mittels rechnergestützter Inferenz (d.h. Schlussfolgern) einen zweiten Prozessgraphen PG2, bei dem es sich um einen AFS-Graphen handelt, in dem alle verarbeiteten Teilprodukte spezifiziert sind. Der Reasoner RE greift bei seiner Ausführung auf die bereits oben erwähnte Wissensbasis KB mit allgemeinen Informationen über Teilprodukte TP und Prozessschritte PS zurück.

Der durch den Reasoner erhaltene zweite Prozessgraph PG2 wird anschließend mit einem zweiten Planer PL2 weiterverarbeitet, bei dem es sich beispielsweise um den bereits oben erwähnten Fast-Forward-Planer bzw. Fast-Downward-Planer handelt. Sofern dieser Planer eine zweite Sequenz SEQ2 mit vollständig parametrisierten Skills ermitteln kann, ist das Verfahren beendet und die Sequenz SEQ2 kann in dem Produktionssystem SYS ausgeführt werden. Ist dies nicht der Fall, wird gemäß Fig. 1 ein Modifikationsschritt MOD' durchgeführt, gemäß dem der ursprüngliche AVS-Graph PG1 geeignet verändert wird. Der Modifikationsschritt MOD' nutzt dabei Informationen, welche sich aus den Fehlschlagen der Planung der Sequenz SEQ2 durch den Planer PL2 ergibt. Insbesondere wird dabei die Information darüber genutzt, welche Skills in der FPS-Sequenz nicht realisiert werden können. Insbesondere können durch den Modifikationsschritt MOD' und ggf. auch durch den obigen Modifikationsschritt MOD bestimmte Teilprodukte ausgeschlossen werden. Nach Durchführung des Modifikationsschritts MOD' wird das Verfahren der Fig. 1 wieder neu über die Ausführung des Planers PL1 gestartet.

Wie bereits oben erwähnt, kann das Verfahren der Fig. 1 auch für einen ersten Prozessgraphen PG1 in der Form eines AFS-Graphen durchgeführt werden. In diesem Fall wird im Bestimmungsschritt DE ermittelt, dass der Prozessgraph PG1 ein AFS-Graph ist (Zweig BR2). Anschließend wird das Verfahren mit dem Planer PL2 fortgesetzt. Sollte der zweite Planer PL2 keine vollständige FPS-Sequenz auffinden können, wird wiederum eine Modifikation des Prozessgraphen PG1 basierend auf Informationen über unvollständig parametrisierte Skills in der FPS-Sequenz durchgeführt.

In einer weiteren Variante des Verfahrens der Fig. 1 kann ferner vorgesehen sein, dass in bestimmten Fällen bei Vorliegen eines AVS-Graphen nicht der erste Planer PL1 gestartet wird. Diese Fälle können über ein geeignetes Kriterium festgelegt sein, z.B. indem ein vorbestimmtes Flag gesetzt wird. Ist das vorbestimmte Kriterium gegeben, wird eine Heuristik HE verwendet, um aus dem AVS-Graphen PG1 einen AFS-Graphen zu generieren. Die Heuristik nutzt dabei Expertenwissen über die möglichen Teilprodukte TP. Die Heuristik liefert in diesem Sinne einen Vorschlag für einen möglichen AFS-Graphen. Dieser Graph wird anschließend direkt durch den zweiten Planer PL2 verarbeitet. Sofern dieser Planer PL2 zu einer zweiten Sequenz SEQ2 führt, ist das Verfahren beendet. Falls nicht, wird wiederum die bereits oben beschriebene Modifikation MOD' vorgenommen bzw. gegebenenfalls nochmals die Heuristik HE aufgerufen.

Im Folgenden wird beispielhaft die Ausführung des Produktionsprozesses der Fig. 1 anhand der bereits oben erwähnten Herstellung eines Spielzeugfahrzeugs erläutert. Ausgangspunkt des Verfahrens ist dabei der in Fig. 2 gezeigte Prozessgraph PG1, bei dem es sich um einen AVS-Graphen handelt, in dem nur Ausgangsprodukte und keine bei der Herstellung des Spielzeugfahrzeugs auftretenden Teilprodukte spezifiziert sind. Die Ausgangsprodukte des Spielzeugfahrzeugs umfassen dabei vier Räder, zwei Achsen, ein Chassis, eine Karosserie, ein Blaulicht und einen Spoiler. In Bezug auf diese Ausgangsprodukte ergeben sich die Knoten N0 bis N10 des Prozessgraphen PG1, welche jeweils einen Produktionsschritt darstellen. Die Knoten entsprechen dabei den folgenden Produktionsschritten:
N0: Initialisierung des Produktionsprozesses;
N1: Einsetzen der Vorderachse in das Chassis;
N2: Einsetzen der Hinterachse in das Chassis;
N3: Einsetzen des linken Vorderrads in die Vorderachse;
N4: Einsetzen des rechten Vorderrads in die Vorderachse;
N5: Einsetzen des linken Hinterrads in die Hinterachse;
N6: Einsetzen des rechten Hinterrads in die Hinterachse;
N7: Aufsetzen der Karosserie auf das Chassis;
N8: Aufsetzen des Blaulichts auf die Karosserie;
N9: Aufsetzen des Spoilers auf die Karosserie;
N10: Beendigung des Produktionsprozesses.

Die obigen Produktionsschritte bzw. entsprechenden Knoten sind über die gerichteten Kanten ED miteinander verbunden, wodurch eine partielle Ordnung beschrieben wird. Gemäß dieser partiellen Ordnung ist ein Produktionsschritt eines Knotens, in den eine gerichtete Kante hineinläuft, nach dem Produktionsschritt des Knotens auszuführen, von dem die gerichtete Kante stammt. Ferner ist der Produktionsschritt eines Knotens, aus dem eine gerichtete Kante hinausläuft, vor dem Produktionsschritt auszuführen, in dessen Knoten die gerichtete Kante hineinläuft.

Basierend auf dem AVS-Graphen PG1 der Fig. 2 wird nunmehr in dem Verfahren der Fig. 1 ein erster Planer PL1 ausgeführt. Dieser Planer liefert eine Sequenz SEQ1 von Skills, wobei die Parameter der einzelnen Skills noch unvollständig sind, so dass eine CPS-Sequenz vorliegt. Diese Sequenz umfasst unter anderem Skills, welche das Greifen von Ausgangsprodukten beschreiben, Skills, welche das Befestigen von Ausgangsprodukten in Haltevorrichtungen beschreiben, und Skills, welche den Zusammenbau von Ausgangsprodukten beschreiben. Ein Beispiel eines solchen Skills lautet wie folgt:
Pick_skill (basic_mat_param: Chassis)

Dieses Skill beschreibt, dass das Ausgangsprodukt (basic_mat_param) "Chassis" gegriffen werden soll. In diesem Skill fehlen jedoch Parameter, wie z.B. die Greifposition.

Nach Erhalt der CPS-Sequenz SEQ1 wird hieraus mit dem obigen Reasoner RE ein AFS-Graph PG2 ermittelt, in dem dann alle entstehenden Teilprodukte spezifiziert sind. Ein Beispiel eines Prozessschritts in einem solchen AFS-Graphen in der Form eines entsprechenden Knotens lautet wie folgt:
Insert_task (sub_prod_param: Axle Back, Chassis_af)

In diesem Skill ist neben dem Ausgangsprodukt der hinteren Achse das Teilprodukt Chassis_af spezifiziert, welches aus dem Chassis und der vorderen Achse besteht, die bereits in das Chassis eingesetzt wurde. Das obige Skill beschreibt das Einsetzen der hinteren Achse in das Teilprodukt bestehend aus Chassis und vorderer Achse.

Schließlich wird aus dem AFS-Graphen durch Anwendung des zweiten Planers PL2 eine FPS-Sequenz generiert, welche vollständig parametrisierte Skills beschreibt und auf dem vorgegebenen Produktionssystem SYS ausgeführt werden kann. Diese Sequenz enthält analog wie die obige CPS-Sequenz Skills zum Greifen, zum Befestigen und zum Zusammenbau, wobei die Skills nunmehr jedoch vollständig parametrisiert sind und auch Teilprodukte spezifizieren können. Ein Beispiel für ein solches Skill lautet wie folgt:
Pick_skill (sub_prod_param: Axle Back; orient_param: grasp position 1).

Dieses Skill beschreibt, dass die hintere Achse mit der Greifposition "grasp position 1" zu greifen ist.

Nach Bestimmung der FPS-Sequenz SEQ2 kann diese mittels einer Steuereinrichtung im Produktionssystem SYS zur Ausführung gebracht werden, so dass das Produktionssystem den Produktionsprozess zur Herstellung des Produkts bzw. des obigen Spielzeugfahrzeugs durchführt.

Die im Vorangegangenen beschriebenen Ausführungsformen der Erfindung weisen eine Reihe von Vorteilen auf. Insbesondere wird eine flexible Planung eines Produktionsprozesses durch geeignete Kombination von rechnergestützten Planern mit einem Reasoner erreicht. Die anfängliche Produktionsaufgabe wird dabei in geeignete Unteraufgaben aufgeteilt, so dass makroskopische Prozessschritte, die lediglich Ausgangsprodukte berücksichtigen, in konkrete Basisfunktionen bzw. Skills übergeführt werden, welche vollständig parametrisiert sind und in Produktionssystem ausgeführt werden können.

## Patentansprüche

1. Verfahren zum rechnergestützten Entwurf eines Produktionsprozesses zum Produzieren eines Produkts in einem vorgegebenen Produktionssystem (SYS) aus mehreren vorgegebenen technischen Komponenten (CO), welche am Produktionsprozess beteiligt sind, wobei in dem Produktionsprozess Ausgangsprodukte verarbeitet werden, welche zu Teilprodukten (TP) und schließlich zu dem Produkt zusammengesetzt werden, wobei für das vorgegebene Produktionssystem (SYS) Basisfunktionen (SK) hinterlegt sind, welche als gekapselte Programme durch die vorgegebenen Komponenten (CO) bei Spezifikation von Parametern der jeweiligen Basisfunktionen (SK) ausführbar sind, und wobei in einer Wissensbasis (KB) semantische Informationen über im Produktionsprozess verarbeitbare Teilprodukte (TP) und über im Produktionsprozess ausführbare Produktionsschritte (PS) gespeichert sind, wobei:
a) eine digitale Spezifikation in der Form eines ersten Prozessgraphen (PG1) eingelesen wird, der Produktionsschritte (N1, N2, ..., N10) zum Produzieren des Produkts unter Verwendung der Ausgangsprodukte und Abhängigkeiten zwischen den Produktionsschritten (N1, N2, ..., N10) beschreibt;
b) bestimmt wird, ob der erste Prozessgraph (PG1) ein Prozessgraph von einem ersten Porzessgraphtyp (AVS) oder von einem zweiten Prozessgraphtyp (AFS) ist, wobei in dem ersten Prozessgraphtyp (AVS) zumindest ein im Produktionsprozess entstehendes Teilprodukt (TP) nicht spezifiziert ist und wobei in einem zweiten Prozessgraphtyp (AFS) alle im Produktionsprozess entstehenden Teilprodukte (TP) spezifiziert sind;
c) falls der erste Prozessgraph (PG1) vom ersten Prozessgraphtyp (AVS) ist und im Falle des Vorhandensein eines ersten Kriteriums dieses erste Kriterium erfüllt ist, ein erster Planer (PL1) ausgeführt wird, der aus dem ersten Prozessgraphen (PG1) eine erste Sequenz (SEQ1) von Basisfunktionen (SK) von einem ersten Sequenztyp (CPS) generiert, wobei im ersten Sequenztyp (CPS) ein oder mehrere Parameter von zumindest einer Basisfunktion (SK) nicht spezifiziert sind;
d) bei Erfüllung eines zweiten Kriteriums oder unabhängig von einem zweiten Kriterium ein Reasoner (RE) ausgeführt wird, der aus der ersten Sequenz (SEQ1) von Basisfunktionen (SK) einen zweiten Prozessgraphen (PG2) vom zweiten Prozessgraphtyp (AFS) generiert, wobei der Reasoner (RE) bei seiner Ausführung auf die Wissensbasis (KB) zugreift;
e) ein zweiter Planer (PL2) ausgeführt wird, der aus dem zweiten Prozessgraphen (PG2) eine zweite Sequenz (SEQ2) von Basisfunktionen (SK) von einem zweiten Sequenztyp (FPS) generiert, sofern eine zweite Sequenz (SEQ2) von Basisfunktionen (SK) auffindbar ist, wobei im zweiten Sequenztyp (FPS) alle Parameter von allen Basisfunktionen (SK) spezifiziert sind.

2. Verfahren nach Anspruch 1, **dadurch gekennzeichnet, dass** im Falle, dass der erste Prozessgraph (PG1) vom zweiten Prozessgraphtyp (AFS) ist, zu Schritt e) übergegangen wird, wobei bei Ausführung des Schritts e) der erste Prozessgraph (PG1) mit dem zweiten Prozessgraphen (PG2) gleichgesetzt wird.

3. Verfahren nach Anspruch 1 oder 2, **dadurch gekennzeichnet, dass** im Falle, dass der erste Prozessgraph (PG1) vom ersten Prozessgraphtyp (AVS) ist und das erste Kriterium gemäß Schritt c) nicht erfüllt ist, mit einem Programm (HE), das auf Expertenwissen über Teilprodukte (TP) basiert, aus dem ersten Prozessgraphen (PG1) ein dritter Prozessgraph vom zweiten Prozessgraphtyp (AFS) generiert wird und zu Schritt e) übergegangen wird, wobei bei Ausführung des Schritts e) der dritte Prozessgraph mit dem zweiten Prozessgraphen (PG2) gleichgesetzt wird.

4. Verfahren nach einem der vorhergehenden Ansprüche, **dadurch gekennzeichnet, dass** im Falle, dass das zweite Kriterium gemäß Schritt d) nicht erfüllt ist, ein Simulations- und/oder Optimierungsprogramm (EP), das auf Expertenwissen über das vorgegebene Produktionssystem (SYS) basiert, ausgeführt wird, um aus der ersten Sequenz (SEQ1) die zweite Sequenz (SEQ2) von Basisfunktionen (SK) zu ermitteln, wobei das Verfahren beendet wird, wenn das Simulations- und/oder Optimierungsprogramm (EP) die zweite Sequenz (SEQ2) von Basisfunktionen (SK) auffindet.

5. Verfahren nach Anspruch 4, **dadurch gekennzeichnet, dass** im Falle, dass das Simulations- und/oder Optimierungsprogramm (EP) keine zweite Sequenz (SEQ2) von Basisfunktionen (SK) auffindet, einer der folgenden Schritte durchgeführt wird:
- das zweite Kriterium wird als erfüllt eingestuft und das Verfahren wird bei Schritt d) fortgesetzt;
- der erste Prozessgraph (PG1) wird basierend auf Wissen modifiziert, welches sich aus der mangelnden Auffindbarkeit der zweiten Sequenz (SEQ2) von Basisfunktionen (SK) ergibt.

6. Verfahren nach einem der vorhergehenden Ansprüche, **dadurch gekennzeichnet, dass** im Falle, dass der zweite Planer (PL2) in Schritt e) keine zweite Sequenz (SEQ2) von Basisfunktionen (SK) auffindet, der erste Prozessgraph (PG1) basierend auf Wissen modifiziert wird, welches sich aus der mangelnden Auffindbarkeit der zweiten Sequenz (SEQ2) von Basisfunktionen (SK) ergibt.

7. Verfahren nach einem der vorhergehenden Ansprüche, **dadurch gekennzeichnet, dass** der erste Prozessgraphtyp (AVS) und/oder der zweite Prozessgraphtyp (AFS) jeweils Knoten (N0, N1, ..., N9) und Kanten (ED) umfassen und jeweils derart ausgestaltet sind, dass jeder Knoten (N0, N1, ..., N10) einen Produktionsschritt repräsentiert und die Knoten (N0, N1, ..., N10) über gerichtete Kanten (ED) miteinander verbunden sind, wobei die gerichteten Kanten (ED) eine partielle Ordnung derart beschreiben, dass der Produktionsschritt eines Knotens (N0, N1, ..., N10), in den eine gerichtete Kante (ED) hineinläuft, nach dem Produktionsschritt des Knotens (N0, N1, ..., N10) auszuführen ist, von dem die gerichtete Kante (ED) stammt, und der Produktionsschritt eines Knotens (N0, N1, ..., N10), aus dem eine gerichtete Kante (ED) hinausläuft, vor dem Produktionsschritt auszuführen ist, in dessen Knoten (N0, N1, ..., N10) die gerichtete Kante (ED) hineinläuft.

8. Verfahren nach einem der vorhergehenden Ansprüche, **dadurch gekennzeichnet, dass** eine jeweilige Basisfunktion (SK) neben Parametern durch eines oder mehrere der folgenden Merkmale charakterisiert ist:
- Vorbedingungen, welche der Zustand des vorgegebenen Produktionssystems (SYS) zur Ausführung der jeweiligen Basisfunktion (SK) erfüllen muss;
- Effekte der Ausführung der jeweiligen Basisfunktion (SK), welche Bedingungen sind, die der Zustand des Produktionssystems (SYS) nach der Ausführung der jeweiligen Basisfunktion (SK) erfüllt;
- Performanzcharakteristika der jeweiligen Basisfunktion (SK).

9. Verfahren nach einem der vorhergehenden Ansprüche, **dadurch gekennzeichnet, dass** die eingelesene digitale Spezifikation in der Form des ersten Prozessgraphen (PG1) eine durch einen Benutzer über eine Benutzerschnittstelle eingegebene oder editierte Information umfasst.

10. Vorrichtung zum rechnergestützten Entwurf eines Produktionsprozesses zum Produzieren eines Produkts in einem vorgegebenen Produktionssystem (SYS) aus mehreren vorgegebenen technischen Komponenten (CO), welche am Produktionsprozess beteiligt sind, wobei in dem Produktionsprozess Ausgangsprodukte verarbeitet werden, welche zu Teilprodukten (TP) und schließlich zu dem Produkt zusammengesetzt werden, wobei für das vorgegebene Produktionssystem (SYS) Basisfunktionen (SK) hinterlegt sind, welche als gekapselte Programme durch die vorgegebenen Komponenten (CO) bei Spezifikation von Parametern der jeweiligen Basisfunktionen (SK) ausführbar sind, und wobei in einer Wissensbasis (KB) semantische Informationen über im Produktionsprozess verarbeitbare Teilprodukte (TP) und über im Produktionsprozess ausführbare Produktionsschritte (PS) gespeichert sind, wobei die Vorrichtung Mittel zur Durchführung der Schritte a) bis e) des Verfahrens gemäß Anspruch 1 umfasst.

11. Vorrichtung nach Anspruch 10, **dadurch gekennzeichnet, dass** die Vorrichtung zur Durchführung eines Verfahrens nach einem der Ansprüche 2 bis 9 eingerichtet ist.

12. Verfahren zu rechnergestützten Steuerung eines Produktionsprozesses zum Produzieren eines Produkts in einem vorgegebenen Produktionssystem (SYS) aus mehreren vorgegebenen technischen Komponenten (CO), welche am Produktionsprozess beteiligt sind, wobei in dem Produktionsprozess Ausgangsprodukte verarbeitet werden, welche zu Teilprodukten (TP) und schließlich zu dem Produkt zusammengesetzt werden, wobei für das vorgegebene Produktionssystem (SYS) Basisfunktionen (SK) hinterlegt sind, welche als gekapselte Programme durch die vorgegebenen Komponenten (CO) bei Spezifikation von Parametern der jeweiligen Basisfunktionen (SK) ausführbar sind, und wobei in einer Wissensbasis (KB) semantische Informationen über im Produktionsprozess verarbeitbare Teilprodukte (TP) und über im Produktionsprozess ausführbare Produktionsschritte (PS) gespeichert sind, wobei
- ein Verfahren zum Entwurf des Produktionsprozesses nach einem der Ansprüche 1 bis 9 ausgeführt wird, wodurch eine zweite Sequenz (SEQ2) von Basisfunktionen (SK) erhalten wird;
- an das vorgegebene Produktionssystem (SYS) Ausführungsbefehle gemäß der zweiten Sequenz (SEQ2) von Basisfunktionen (SK) gegeben werden.

13. Vorrichtung zur rechnergestützten Steuerung eines Produktionsprozesses zum Produzieren eines Produkts in einem vorgegebenen Produktionssystem (SYS) aus mehreren vorgegebenen technischen Komponenten (CO), welche am Produktionsprozess beteiligt sind, wobei in dem Produktionsprozess Ausgangsprodukte verarbeitet werden, welche zu Teilprodukten (TP) und schließlich zu dem Produkt zusammengesetzt werden, wobei für das vorgegebene Produktionssystem (SYS) Basisfunktionen (SK) hinterlegt sind, welche als gekapselte Programme durch die vorgegebenen Komponenten (CO) bei Spezifikation von Parametern der jeweiligen Basisfunktionen (SK) ausführbar sind, und wobei in einer Wissensbasis (KB) semantische Informationen über im Produktionsprozess verarbeitbare Teilprodukte (TP) und über im Produktionsprozess ausführbare Produktionsschritte (PS) gespeichert sind, umfassend
- eine Vorrichtung zum rechnergestützten Entwurf des Produktionsprozesses gemäß Anspruch 10 oder 11, mit welcher eine zweite Sequenz (SEQ2) von Basisfunktionen (SK) erhalten wird;
- ein Mittel, um an das vorgegebene Produktionssystem (SYS) Ausführungsbefehle gemäß der zweiten Sequenz (SEQ2) von Basisfunktionen (SK) zu geben.

14. Computerprogramm mit einem Programmcode zur Durchführung eines Verfahrens nach einem der Ansprüche 1 bis 9 oder nach Anspruch 12, wenn der Programmcode auf einem Computer ausgeführt wird.

15. Computerprogrammprodukt mit einem auf einem maschinenlesbaren Träger gespeicherten Programmcode zur Durchführung eines Verfahrens nach einem der Ansprüche 1 bis 9 oder nach Anspruch 12, wenn der Programmcode auf einem Computer ausgeführt wird.
